# EUROPEAN PATENT APPLICATION

(11) **EP 1 640 857 A2**
(43) Date of publication of application: **29.03.2006**
(21) Application number: 05255390.6
(22) Date of filing: 02.09.2005
(51) Int. Cl.: G06F 9/44

(54) **Method for defining the operations of a client while using a web service**

(30) Priority: 02.09.2004 JP 2004255902; 22.08.2005 JP 2005240304
(71) Applicant: Ricoh Company, Ltd., Tokyo 143-8555 (JP)
(72) Inventor: Takeuchi, Sachiko, Tokyo (JP); Ito, Tatsuo, Sagamihara-shi, Kanagawa (JP)
(74) Representative: Mounteney, Simon James

(57) **Abstract**

An operation definition information producing method can easily produce operation definition information which can define an operation of a client when using services. The operation definition information defines an operation of a client when using service in a system in which a server providing the service and the client using the service are connected by a network. A user is caused to define a state of the client when using the service and an operation in the state. A producing step produces the operation definition information that defines the operation of the client when using the service from the state of the client when using the service and the operation in the state that are defined by the user.

## Description

### BACKGROUND OF THE INVENTION

### 1. Field of the Invention

The present invention generally relates to operation definition information producing techniques and, more particularly, to a method, an apparatus and a program for producing operation definition information which defines operations of a client when using services, a recording medium storing such an operation definition producing program and a data structure of such operation definition information.

### 2. Description of the Related Art

In recent years, a server (hereinafter, referred to as a Web service server), which provides various kinds of services such as authentication service or equipment management service to clients as Web service, has attracted attention. The Web service server performs a call of the Web service and transmission and reception of data according to a protocol of XML (extensible Markup Language) base, which is represented, for example, by SOAP (Simple Object Access Protocol).

Additionally, a client (hereinafter referred to as a Web service client) using Web service calls the Web service by using SOAP after acquiring information regarding methods and parameters, which the Web service has, according to WSDL (Web Service Description Language). The WSDL is information which is needed when using the Web service, and designates a data-description method for acquiring the information regarding the methods and parameters of the Web service. That is, the Web service client acquires the I/F specification of the Web service according to the WSDL (for example, refer to Patent Document 1).

Patent Document 1: Japanese Laid-Open Patent Application No. 2004-30360

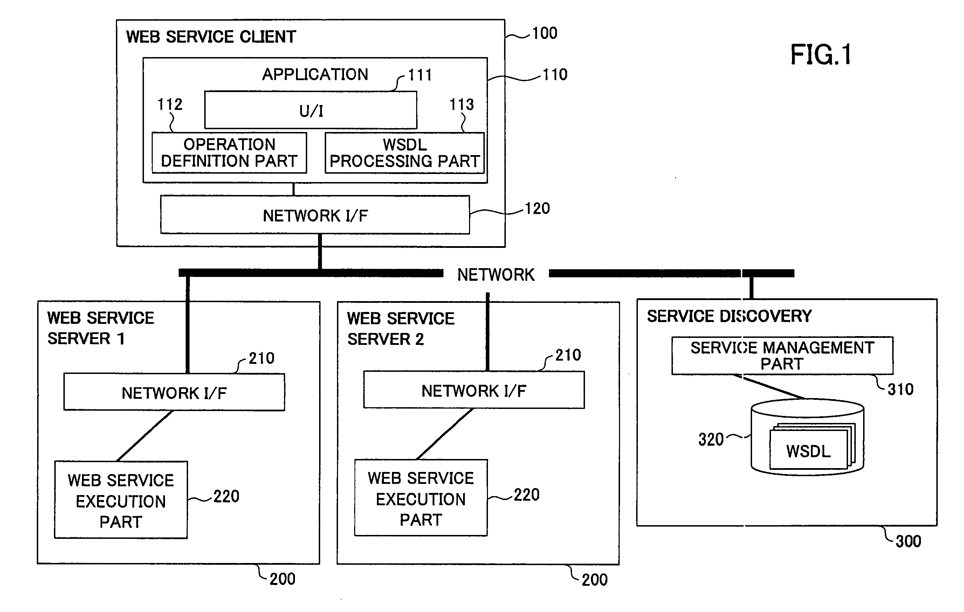

FIG. 1 is a block diagram of an example of a Web service system. The Web service system of FIG. 1 comprises a Web service client 100, at least one Web service server 200 and a service discovery 300, which are connected with each other through a network.

The Web service client 100 using Web service contains an application 110 and a network I/F 120. The application 110 contains a U/I (user interface) 111, an operation definition part 112 and a WSDL processing part 113.

Moreover, the Web service server 200, which offers the Web service, contains a network I/F 210 and a Web service execution part 220. The service discovery 300, which manages the Web service, contains a service management part 310 and a storage part 320 in which WSDL is stored.

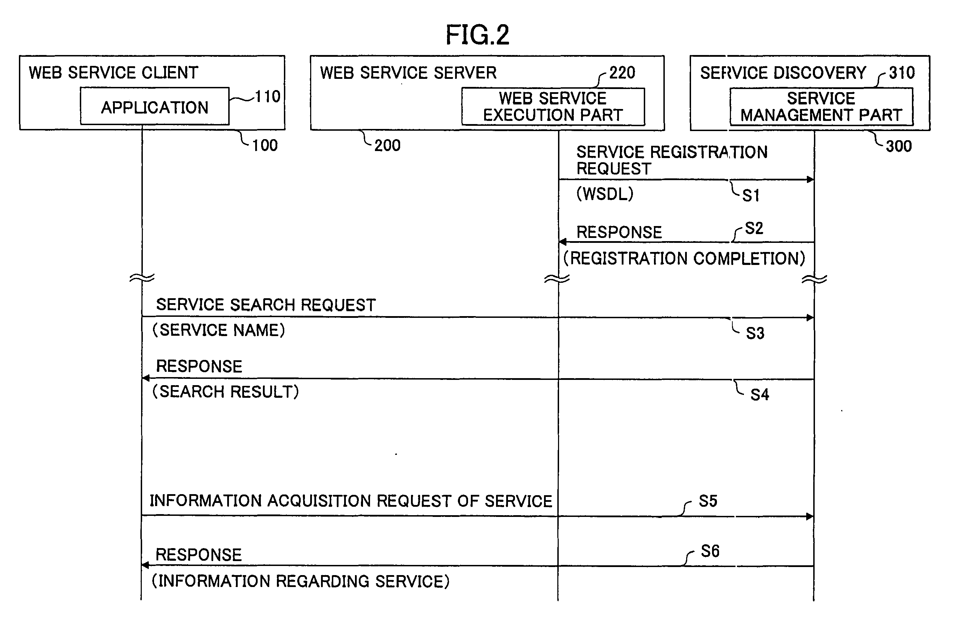

FIG. 2 is a sequence chart showing a process of the Web service system. In steps S1-S2, the Web service server 200, which offers the Web service, registers the WSDL describing the I/F specification of the Web service in the service discovery 30. Additionally, in steps S3-S4, the Web service client 100 using the Web service searches for the Web services, which the Web service server 200 offers, from the service discovery 300.

A user who operates the Web service client 100 designates the Web service to use among the Web services. In steps S5-S6, the Web service client 100 acquires the information regarding the Web service designated by the user (for example, a Web service name, an IP address of the Web service server 200, WSDL, etc.) from the service discovery 300.

As mentioned above, the Web service client 100 acquires the WSDL of the Web service selected by the user as indicated in the sequence chart shown in FIG. 2. Accordingly, the Web service client 100 can know what commands the Web service has and what parameters should be given to execute the commands

However, although the WSDL defines the I/F specification of the Web service, the WSDL does not define an operation of the Web service client when using the Web service. Therefore, there is a problem in that the Web service client 100 cannot respond when a method of offering Web services is changed, a new function is added or a new Web service is added.

For example, the operation of the Web service client 100 when using the Web service is previously coded in the operation definition part 112. Therefore, there is a problem in that the Web service client 100 must correct the operation definition part 112 when the method of offering the Web service is changed, a new function is added and a new Web service is added.

It should be noted that the above-mentioned Patent Document 1 discloses production of a dedicated API (Application Program Interface) on a substitutional server in accordance with the acquired WSDL so that the Web service client uses the Web service through the dedicated API. That is, the operation of the Web service client when using the Web service is not defined.

### SUMMARY OF THE INVENTION

It is a general object of the present invention to provide an operation definition information producing technique in which the above-mentioned problems are eliminated.

A more specific object of the present invention is to provide operation definition information producing method and apparatus that can easily produce operation definition information which can define an operation of a client when using services.

In order to achieve the above-mentioned objects, there is provided according to one aspect of the present invention an operation definition information producing method for producing operation definition information that defines an operation of a client when using service in a system in which a server providing the service and the client using the service are connected by a network, the operation definition information producing method comprising: a defining step of causing a user to define a state of the client when using the service and an operation in the state; and a producing step of producing the operation definition information that defines the operation of the client when using the service from the state of the client when using the service and the operation in the state that are defined by the user.

In the operation definition information producing method according to the present invention, the producing step may include: a step of analyzing an operation of the client when using the service in accordance with the state of the client when using the service and the operation in the state that are defined by the user; and a step of producing the operation definition information that defines the operation of the client when using the service in accordance with a result of analysis in the analyzing step.

In the operation definition information producing method, the defining step may cause the user to visually define the state of the client when using the service and the operation in the state. The defining step may cause the user to define the state of the client when using the service and the operation in the state by using a state transit diagram. The defining step may cause the user to define the state of the client when using the service and the operation in the state by using a sequence diagram. The defining step may cause the user to define the state of the client when using the service and the operation in the state by using a table.

In the operation definition information producing method according to the present invention, the producing step may cause the user to edit the operation definition information that has already been produced. The producing step may produce the operation definition information including a state definition part, a method definition part and a state transition condition definition part. The producing step may produce the operation definition information of an operation of the client when using the service by a fundamental group, an alternative group and an exceptional group.

Additionally, there is provided according to another aspect of the present invention an operation definition information producing method for producing operation definition information that defines an operation of a client when using service in a system in which a server providing the service and the client using the service are connected by a network, the operation definition information producing method comprising: a defining step of causing a user to define an action of the client when using the service and an operation in the action; and a producing step of producing the operation definition information that defines the action of the client when using the service from the action of the client when using the service and the operation in the action that are defined by the user.

Additionally, there is provided according to anther aspect of the present invention an operation definition information producing apparatus for producing operation definition information that defines an operation of a client when using service in a system in which a server providing the service and the client using the service are connected by a network, the operation definition information producing apparatus comprising: defining means for causing a user to define a state of the client when using the service and an operation in the state; and producing means for producing the operation definition information that defines the operation of the client when using the service from the state of the client when using the service and the operation in the state that are defined by the user.

Further, there is provided according to another aspect of the present invention an operation definition information producing program that causes a computer, which produces operation definition information that defines an operation of a client when using service in a system in which a server providing the service and the client using the service are connected by a network, to function as: defining means for causing a user to define a state of the client when using the service and an operation in the state; and producing means for producing the operation definition information that defines the operation of the client when using the service from the state of the client when using the service and the operation in the state that are defined by the user.

Additionally, there is provided according to another aspect of the present invention a computer readable recording medium storing an operation definition information producing program that causes a computer, which produces operation definition information that defines an operation of a client when using service in a system in which a server providing the service and the client using the service are connected by a network, to function as: defining means for causing a user to define a state of the client when using the service and an operation in the state; and producing means for producing the operation definition information that defines the operation of the client when using the service from the state of the client when using the service and the operation in the state that are defined by the user.

Further, there is provided according to another aspect of the present invention a data structure of operation definition information that defines an operation of a client when using service in a system in which a server providing the service and the client using the service are connected by a network, wherein the operation of the client when using the service is expressed by a state definition part, a method definition part and a state transition condition definition part.

According to the present invention, the operation definition information producing method, apparatus, and program can easily produce the operation information that can easily produce the operation definition information that can define the operation of the client when using the service in accordance with addition or changes in the service provided by the server. Additionally, the recording medium storing the operation definition information and the data structure of the operation definition information are provided.

Other objects, features and advantages of the present invention will become more apparent from the following detailed description when read in conjunction with the accompanying drawings.

### BRIEF DESCRIPTION OF THE DRAWINGS

FIG. 1 is a block diagram of an example of a Web service system.
FIG. 2 is a sequence chart showing a process of the Web service system shown in FIG. 1;
FIG. 3 is a block diagram of an example of a Web service system including a scenario producing device according to the present invention;
FIG. 4 is a block diagram of another example of the scenario producing device shown in FIG. 3;
FIG. 5 is a block diagram of another example of the scenario producing device shown in FIG. 3;
FIG. 6 is a block diagram of another example of the scenario producing device shown in FIG. 3;
FIG. 7 is a block diagram of a hardware of an example of a computer, which realizes the scenario producing device;
FIG. 8 is a flowchart of a scenario producing process performed by a scenario producing device according to the present invention;
FIG. 9 is an illustration of a state transition diagram producing screen;
FIG. 10 is an illustration of a state setting screen;
FIG. 11 is an illustration a state transition setting screen;
FIG. 12 is an illustration of a state transition setting screen where a method is set up;
FIG. 13 is an illustration of a state transition diagram produced by a user;
FIG. 14 is an illustration of an example expressing a produced scenario in a natural language;
FIG. 15 is an illustration of a part of a scenario described by XML;
FIG. 16 is an illustration of a part of the scenario described by XML;
FIG. 17 is an illustration of a part of the scenario described by XML;
FIG. 18 is an illustration of a part of the scenario described by XML;
FIG. 19 is an illustration of a part of the scenario described by XML;
FIG. 20 is a flowchart of another example of the scenario producing process performed by the scenario producing device according to the present invention;
FIG. 21 is an illustration of a sequence diagram producing screen;
FIG. 22 is a sequence diagram produced by a user;
FIG. 23 is a state transition diagram produced from the sequence diagram of FIG. 22;
FIG. 24 is an illustration of a part of a scenario produced from the state transition diagram of FIG. 23;
FIG. 25 is an illustration of a part of the scenario produced from the state transition diagram of FIG. 23; and
FIG. 26 is an illustration of an example of a state transition table produced by a user.

### DETAILED DESCRIPTION OF THE PREFERRED EMBODIMENTS

A description will now be given, with reference to the drawings, of an embodiment of the present invention. It should be noted that, in the following description, operation definition information, which defines an operation of a Web service client when using a Web service, is referred to as scenario.

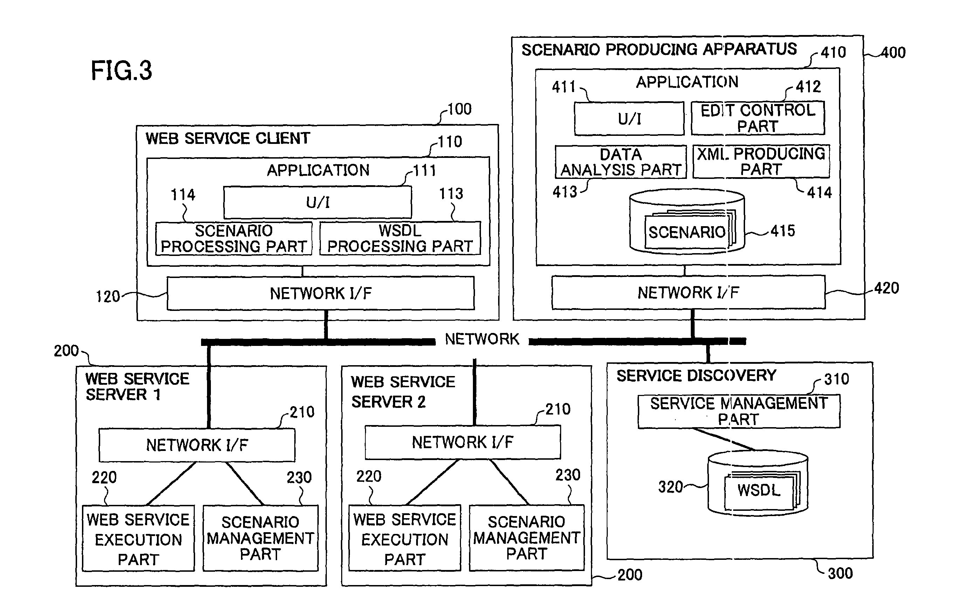

FIG. 3 is a block diagram of an example of a Web service system containing a scenario producing device according to the present invention. The Web service system of FIG. 3 comprises a Web service client 100, at least one Web service server 200 and a service discovery 300, which are connected to each other through a network such as the Internet or a LAN (local area network). It should be noted that the Web service system may be constituted without the service discovery 300.

The application 110 using the Web service includes an application 110 and a network I/F 120. The application 110 includes a U/I 111, a WSDL processing part 113 and a scenario processing part 114. The application 110 connects to the network through the network I/F 120.

Moreover, the Web service server 200, which offers the Web service, includes a network I/F 210, a Web service execution part 220 and a scenario management part 230. The Web service execution part 220 and a scenario management part 23 connect to the network through the network I/F 210. The service discovery 300, which manages the Web service, includes a service management part 310 and a storage part 320 which stores WSDL.

Moreover, the scenario producing device 400, which produces a scenario, includes an application 410 and a network I/F 420. The application 410 includes a U/I 411, an editor control part 412, a data analysis part 413, an XML generation part 414 and a storage part 415 in which scenario is stored and managed. The application 410 is connected to a network through the network I/F 420. It should be noted that the scenario produced y the scenario producing device 400 defines operations of the Web service client 100 when using the Web service.

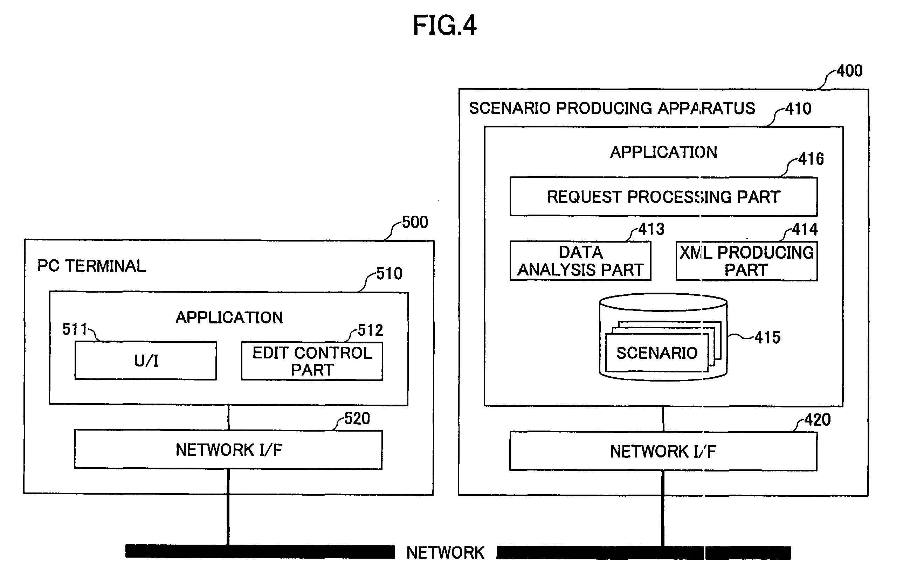

Besides the structure shown in FIG. 3, the scenario producing device 400 may have structures such as shown in FIG. 4 through FIG. 6. FIG. 4 is a block diagram of another example of the scenario producing device 400. The scenario producing device of FIG. 4 includes an application 410 and a network I/F 420. The application 410 includes a data analysis part 413, an XML generation part 414, a storage part 415 in which scenario is stored, and a request processing part 416.

The scenario producing device 400 of FIG. 4 differs from the scenario producing device 400 of FIG. 3 in that the U/I 411 and the editor control part 412 are not provided. That is, the scenario producing device 400 of FIG. 4 separates the U/I 411 and the editor control part 412, and locates them as an application 510 on a PC terminal 500 connected through the network.

The PC terminal 500 includes an application 510 and a network I/F 520. The application 510 includes a U/I 511 and an editor control part 512. The request processing part 416 of the scenario producing device 400 can receive an instruction from the PC terminal 500.

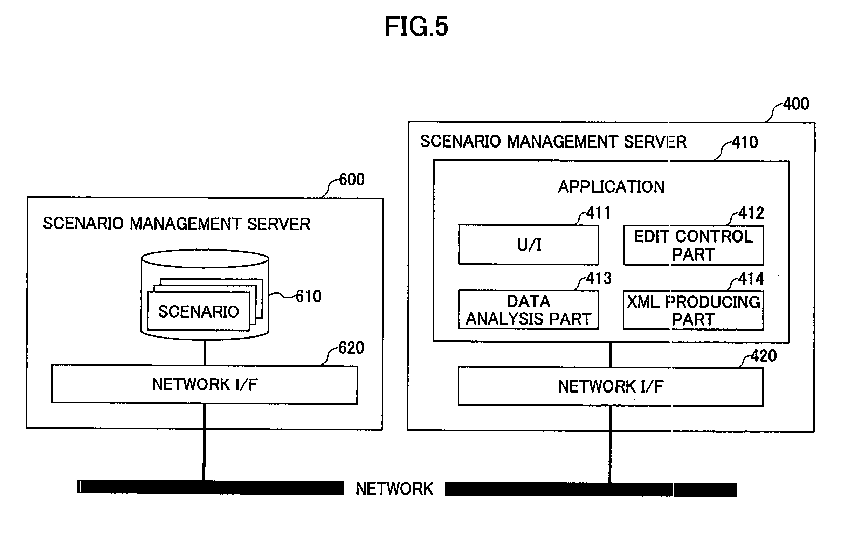

FIG. 5 is a block diagram of another example of the scenario producing device 400. The scenario producing device 400 of FIG. 5 includes an application 410 and a network I/F 420. The application 410 includes a U/I 411, an editor control part 412, a data analysis part 413 and an XML generation part 414.

The scenario producing device 400 of FIG. 5 differs from the scenario producing device 400 of FIG. 3 in that the storage part 415 in which scenario is stored and managed is not provided. That is, the storage part 415 is separated from the scenario producing device 400 of FIG. 5 and is arranged as a storage part 610 on a scenario management server 600 connected through the network.

The scenario management server 600 includes a storage part 610 and a network I/F 620. The storage part 610 is connected to the network through the network I/F 620. The application 410 of the scenario producing device 400 can cause the scenario management server 600 to store and manage the scenario.

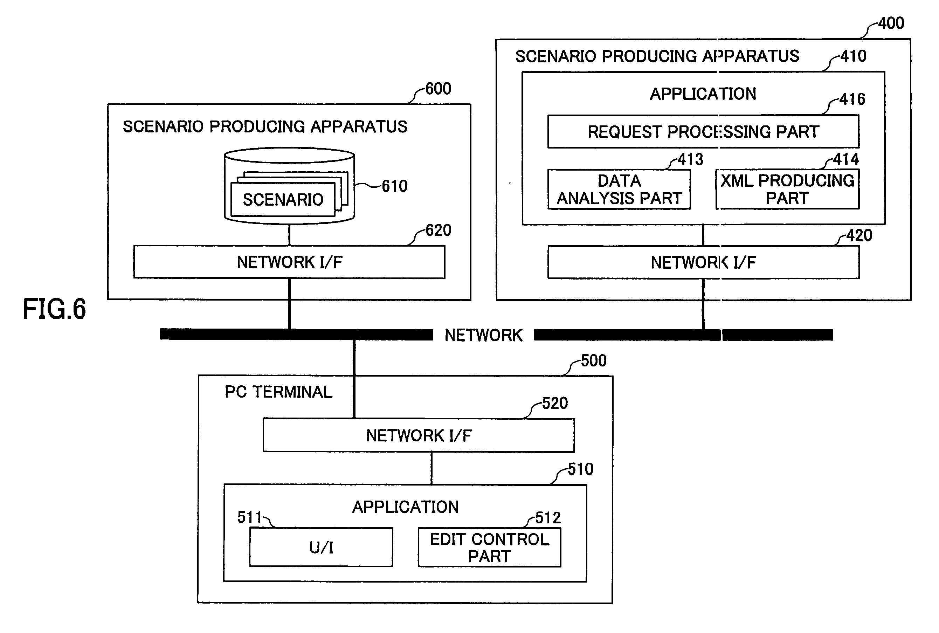

FIG. 6 is a block diagram of another example of the scenario producing device 400. The scenario producing device 400 of FIG. 6 includes an application 410 and a network I/F 420. The application 410 includes a data analysis part 413, an XML generation part 414, and a request processing part 416 FIG. 3 is a block diagram of an example of a Web service system containing a scenario producing device according to the present invention..

The scenario producing device 400 of FIG. 6 differs from the scenario producing device 400 of FIG. 3 in that the U/I 411, the editor control part 412 and the storage part 415 in which the scenario is stored and managed are not provided. That is, the U/I 411 and the editor control part 412 are separated from the scenario producing device 400 of FIG. 6, and are arranged as an application 510 on the PC terminal 500 connected through the network. Additionally, the storage part 415 in which the scenario is stored and managed is separated, and is arranged as a storage part 610 on a scenario management server 600, which is connected to the scenario producing device 400 through the network.

The PC terminal 500 includes an application 510 and a network I/F520. The application 510 includes a U/I 511 and an editor control part 512. The request processing part 416 of the scenario producing device 400 is capable of receiving instructions from the PC terminal 500.

The scenario management server 600 includes a storage part 610 and a network I/F 620. The storage part 610 is connected to the network through the network I/F 620. The application 410 of the scenario producing device 400 can cause the scenario management server 600 to store and manage the scenario.

The scenario producing device 400 of FIG. 6 is an example which combines the structures of the scenario producing device 400 of FIG. 4 and FIG. 5.

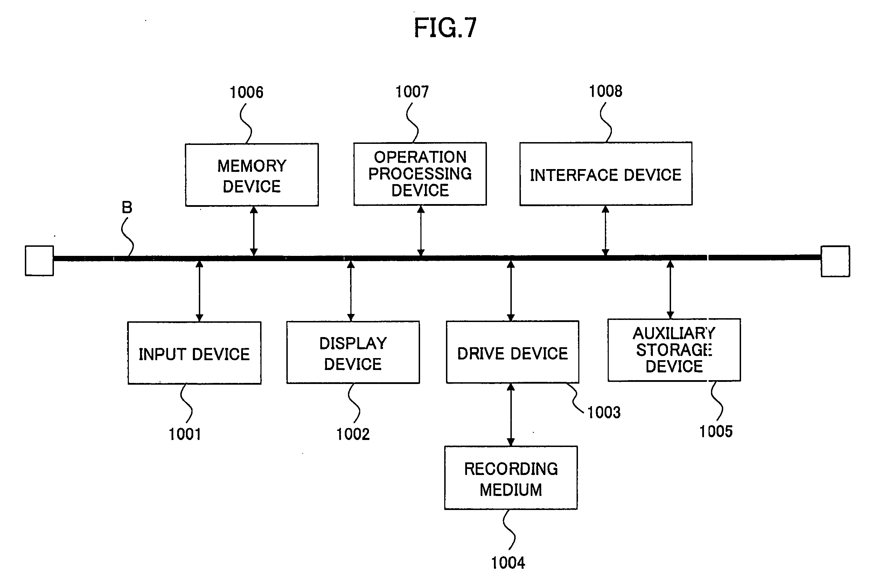

FIG. 7 is a block diagram of a hardware of an example of a computer, which realizes the scenario producing device. The computer of FIG. 7 comprises an input device 1001, a display device 1002, a drive device 1003, an auxiliary memory device 1005, a memory device 1006, an operation processing device 1007, and an interface device 1008, which are mutually connected by a bus B. It should be noted that the devices constituting the computer of FIG. 7 may be accommodated in a single housing, or may be separated and accommodated in a plurality of housings.

The input device 1001 consists of a keyboard, a mouse, etc., and is used to input various operation instructions. The display device 1002 consists of a display or the like so as to display various windows, data, etc. The interface device 1008 is an interface for connecting to the network, and consists of a modem, a router, etc.

The scenario producing program, which controls the scenario producing device is provided by a recording medium 1004 such as a CD-ROM. The recording medium 1004 which store the scenario producing program is loaded to the drive device 1003, and the scenario producing program is installed in the auxiliary memory device 1005 through the drive device 1003.

The recording medium 1004, which stores the scenario producing program, can be various types of recording medium such as a recording medium storing information optically, electrically or magnetically such as a CD-ROM, a flexible disk, magneto-optical disk (MO), etc., or a semiconductor memory storing information electrically such as a ROM, a semiconductor memory, etc.

Moreover, the scenario producing program may be stored in a recording medium of other computers connected to the network through the interface device 1008. A scenario producing program stored in a recording medium of other computers is downloaded via the interface device 1008, and is installed in the auxiliary memory device 1005. The auxiliary memory device 1005 stores the installed scenario producing program and various files required for execution of the scenario producing program. The memory device 1006 reads and stores the scenario producing program from auxiliary memory 1005 at the time of running.

The operation processing device 1007 realizes the application 410 and the network I/F 420 of the scenario producing device 400 by various processes according to the scenario producing program stored in the memory device 1006. It should be noted that the PC terminal 500 and the scenario management server 600 are realizable by a computer having the hardware structure shown in FIG. 7.

### (First Embodiment)

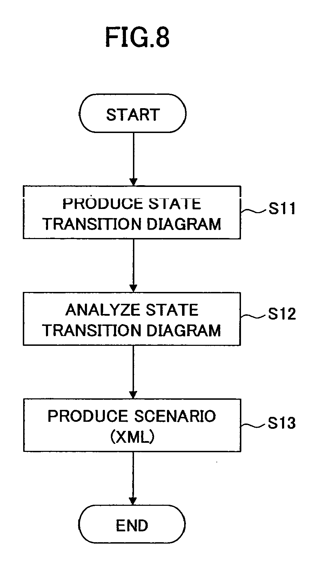

A description will be given below of a process performed be the scenario producing device according to the present invention. It should be noted that the following description uses the structure of the scenario producing device 400 of FIG. 3 as an example. FIG. 8 is a flowchart of an example of the scenario producing process performed by the scenario producing device according to the present invention.

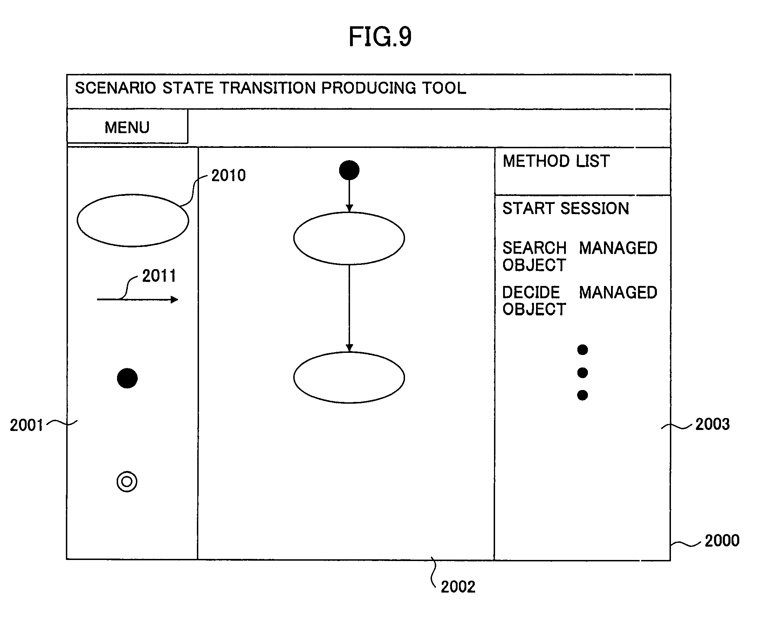

The application 410 of the scenario producing device 400 has an editor function for producing a state transition diagram. In step S11, a user produces a state transition diagram by using the editor function of the application 410. Specifically, when the user gives an instruction to run the editor function, the editor control part 412 of the application 410 show a user of a state transition diagram producing screen 2000 as shown in FIG. 9 by using the U/I 411.

FIG. 9 is an illustration of an example of the state transition diagram producing screen. The state transition diagram producing screen 2000 of FIG. 9 consists of a parts selection column 2001 through which parts required for production of a state transition diagram are selectable, a work column 2002 for actually producing a state transition diagram, and a method list display column 2003 for displaying a registered method list.

A user selects parts necessary for producing the state transition diagram such as an icon 2010 representing a state or an icon 2011 representing a state transition from the parts selection column, and produces the state transition diagram in the work column by using the selected parts. The editor control part 412 displays the state transition diagram according to the operations of the user on the work column 2002.

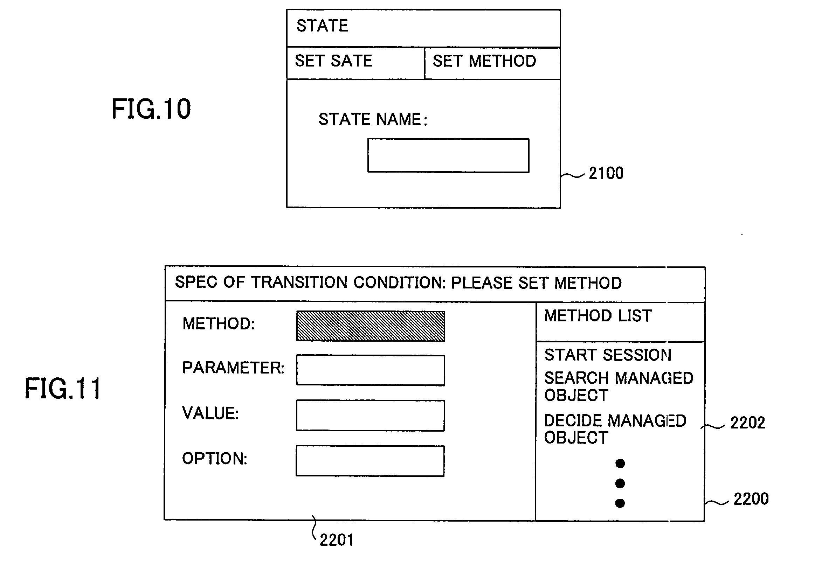

If the icon 2010 representing the state displayed on the work column 2002 is selected, the editor control part 412 presents the user of a state setting screen 2100 such as shown in FIG. 10. FIG. 10 is an illustration of an example of the state setting screen. The editor control part sets the contents input to the state setting screen 2100 as a state name.

Moreover, if the icon 2011 representing the state transition currently displayed on the work column 2002 is selected, the editor control section 412 present the user of a state transition setting screen 2200 which can set a method, a parameter, a value and an option as shown in FIG. 11. FIG. 11 is an illustration of an example of the state transition setting screen.

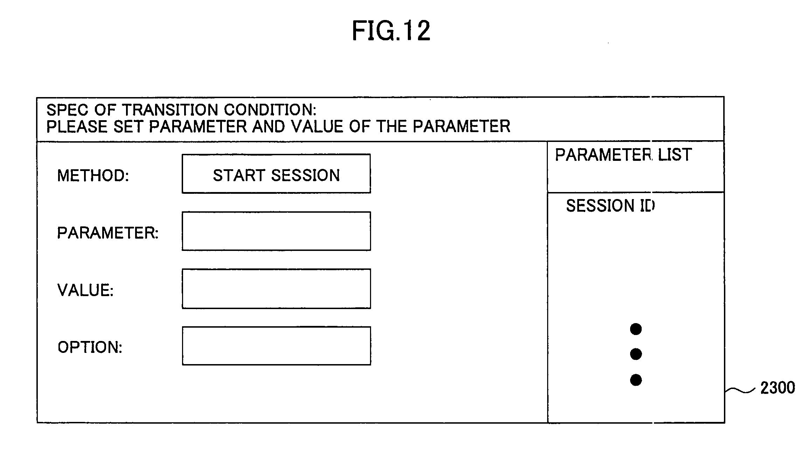

The state transition setting screen 2200 of FIG. 11 consists of a setting column 2201 for setting the method, the parameter, the value and the option and a method list display column 2202 for displaying a registered method list. The editor control part 412 sets up the contents input into the setting column 2201 as the method, the parameter, the value and the option. For example, if the method is set in the setting column 2201, the state-transition setting screen 2200 of FIG. 11 transits to the state transition setting screen 2300 such as shown in FIG. 12. FIG. 12 is an illustration of an example of the state transition setting screen where the method is set up.

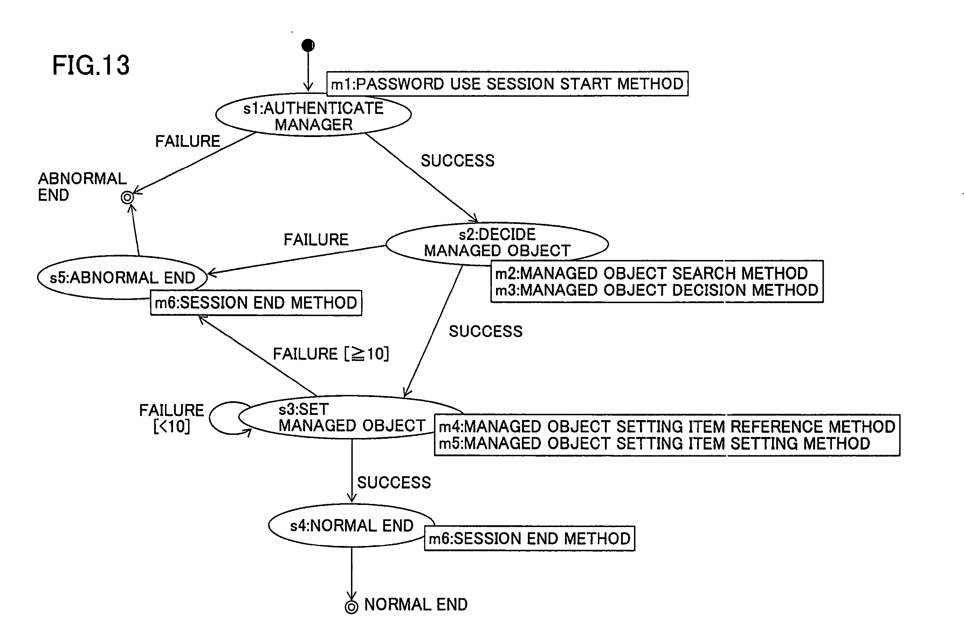

By using the above-mentioned editor function, a user can produce the state transition diagram such as shown in FIG. 13. FIG. 13 is an illustration of the state transition diagram produced by a user. The state transition diagram of FIG. 13 is an example which visually expresses operations of the Web service client 100 when using Web service, and expresses the operations of the Web service client 100, when using the Web service, by the state, the method to use and the state transition condition. In other words, the editor function can cause a user to define the state of the Web service client 100 when using the Web service and the operation in the state.

In step S12, the data analysis part 413 analyzes the state transition diagram produced in step S11. That is, in step S12, the operations of the Web service client 100 when using the Web service is analyzed in viewpoint of a state, a method to use and a state transition condition. In step S13, the XML generation part 414 produces a scenario based in accordance with a result of the analysis in step S12.

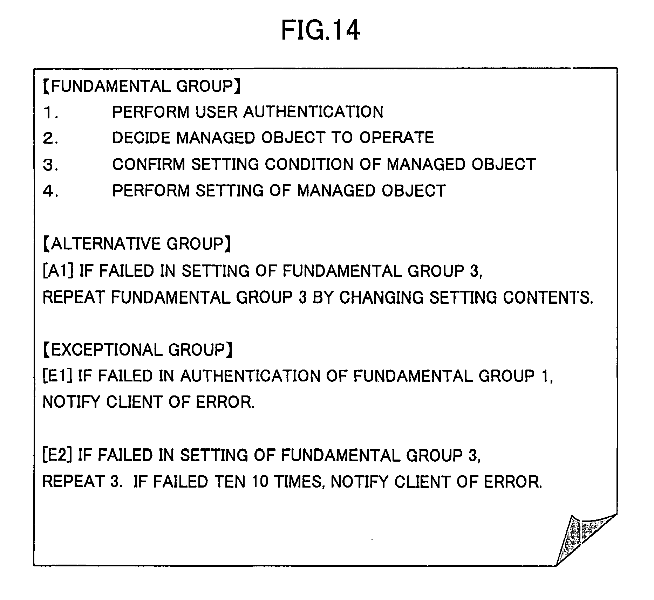

FIG. 14 is an illustration of an example expressing the produced scenario in a natural language. It should be noted that although the scenario shown in FIG. 14 is described in the natural language for the purpose of easy understanding, it is originally described in XML. The scenario of FIG. 14 defines operations of the Web service client 100 when using the Web service according to a fundamental group, an alternative group, and an exceptional group. It should be noted that FIG. 14 is an example of the scenario produced from the state transition diagram of FIG. 13.

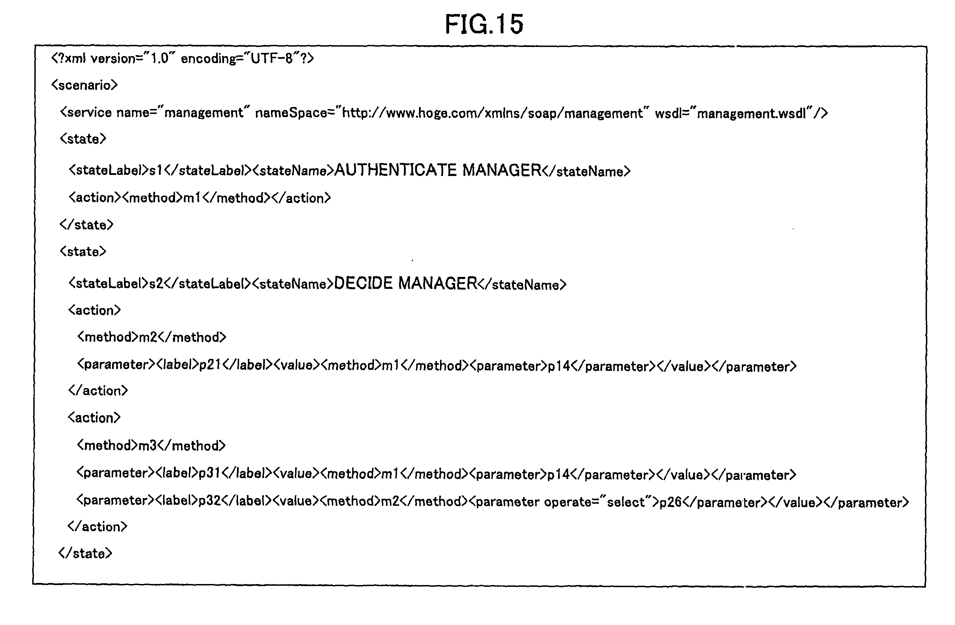

Moreover, FIG. 15 through FIG. 19 are illustrations of an example of the scenario described by XML. It should be noted that the scenario shown in FIG. 15 through FIG. 19 is an example of the scenario produced from the state transition diagram of FIG. 13. The scenario of FIG. 15 through FIG. 19 consists of a state definition part, a method definition part and a state transition condition definition part.

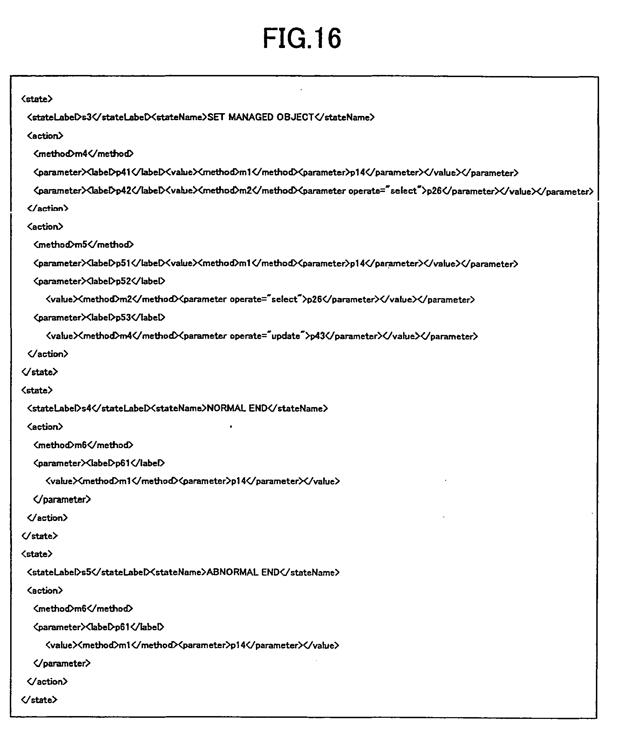

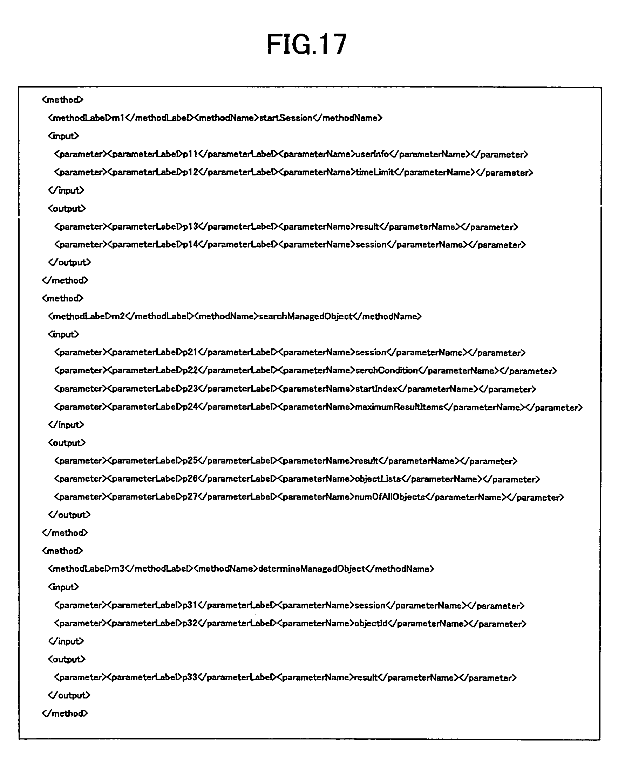

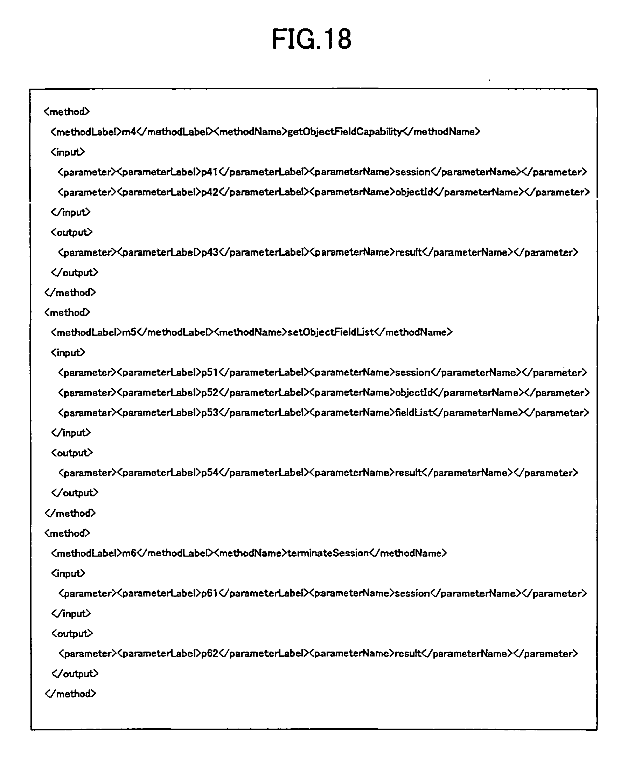

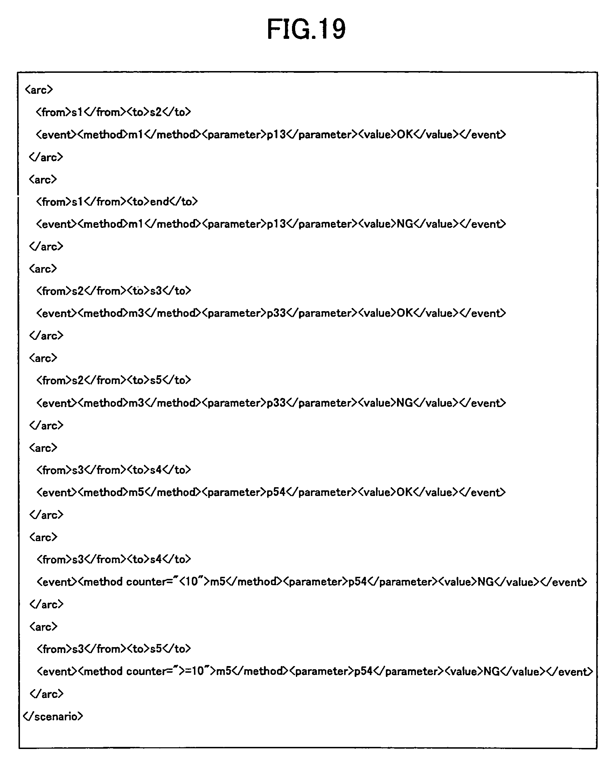

FIG. 15 and FIG. 16 show the state definition part of the scenario. FIG. 17 and FIG. 18 show the method definition part of the scenario. FIG. 19 shows the state transition condition definition part of the scenario. It should be noted that tags <state>, <method> and <arc> contained in the scenario of FIG. 15 through FIG. 19 express a state, a method and a state transition condition, respectively.

Therefore, the scenario producing device 400 can produce the scenario described in XML as shown in FIG. 15 through FIG. 19 from the state transition diagram shown in FIG. 13 produced by a user.

### (Second Embodiment)

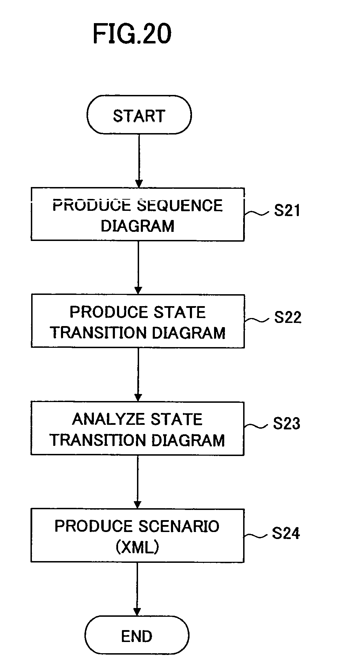

Although the user is caused to produce a state transition diagram so as to produce the scenario from the state transition diagram in the scenario producing device 400 according to the first embodiment, the user may be caused to produce a sequence diagram so as to produce the scenario. FIG. 20 is a flowchart of another example of the scenario producing process performed by the scenario producing device according to the present invention.

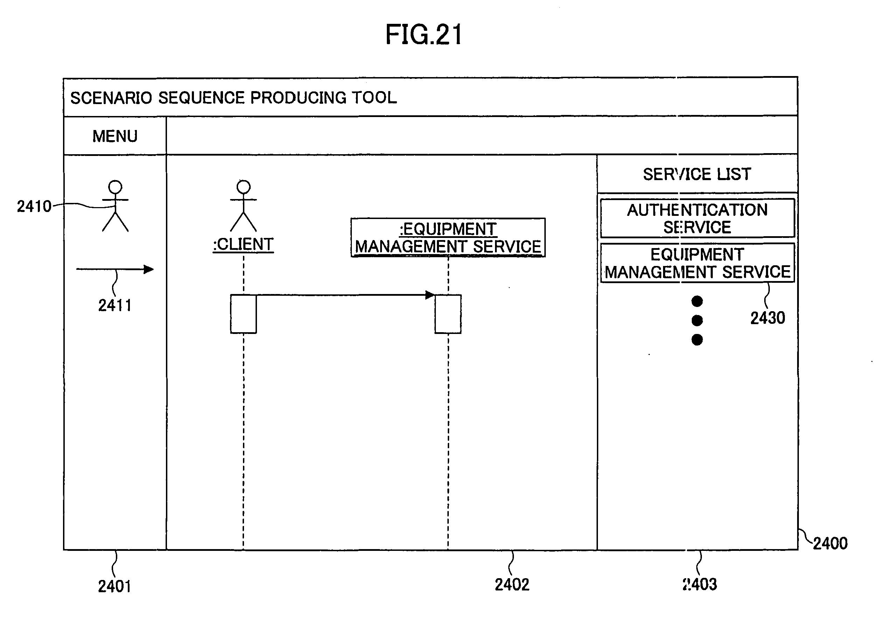

The application 410 of the scenario producing device 400 has an editor function for producing a sequence diagram. In step S21, a user produces a sequence diagram using the editor function of the application 410. Specifically, when the user issues and instruction to run the editor function, the editor control part 412 of the application 410 present a sequence diagram such as shown in FIG. 21 to the user by using the U/I 411.

FIG. 21 is an illustration of an example of the sequence diagram producing screen. The sequence diagram producing screen 2400 of FIG. 21 consists of a parts selection column 2401 through which parts necessary for producing the sequence diagram is selectable, a work column 2402 which actually produces a sequence diagram, and a service list display column 2403 which displays a registered service list.

A user selects necessary parts such as an icon from the parts selection column 2401 so as to produce the sequence chart in the work column 2402. The editor control part 412 displays the sequence diagram according to the operation of the user in the work column 2402. For example, if the user selects an icon 2410 representing an actor from the parts selection column 2401 and drags it into the work column 2402, the editor control part 412 indicates the dragged icon 2410 as a module in the work column 2402, and displays a dotted line under the icon 2410. Additionally, when the user selects an icon 2430 representing a device management service from the service list display column 2403 and drags it into the work column 2402, the editor control part 412 indicates the dragged icon 2430 as a module in the work column 2402 and displays a dotted line under the icon 2430.

If the icon 2411 representing the state displayed in the work column 2402 is selected, the editor control part 412 presents the state transit setting screen, in which a method, a parameter, a value and an option is selectable, to the user.

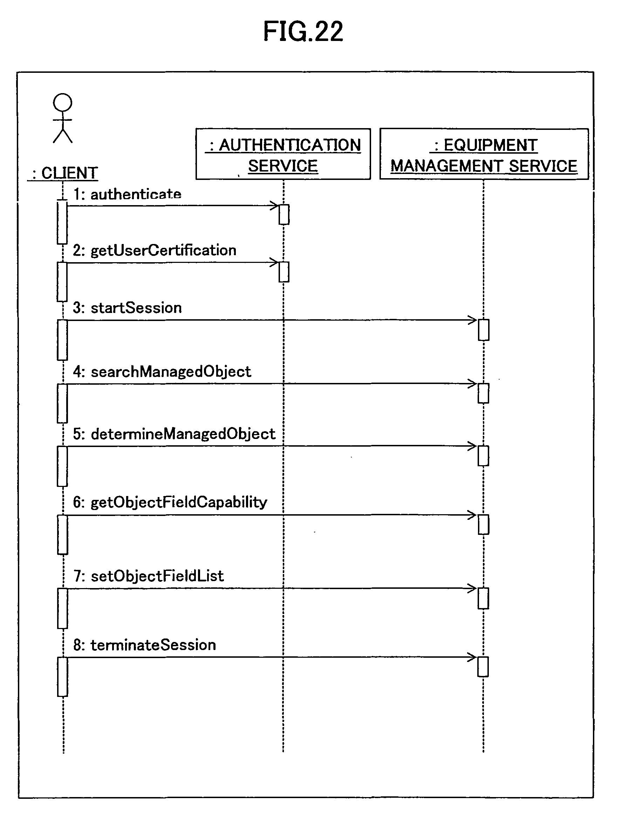

By using the above-mentioned editor function, a user can produce a sequence diagram as shown in FIG. 22. FIG. 22 is an example of the sequence diagram produced by the user. The sequence diagram of FIG. 22 is an example of illustration representing visually an operation of the Web service client 100 when using the Web service.

The sequence diagram of FIG. 22 expresses the operation of the Web service client 100 when using the Web service by a message sent from the Web service client 100 to the Web service. In this case, the message is equivalent to a method to the Web service. Moreover, when producing an operation of the Web service by a sequence diagram, it is possible to cause a plurality of Web services to cooperate.

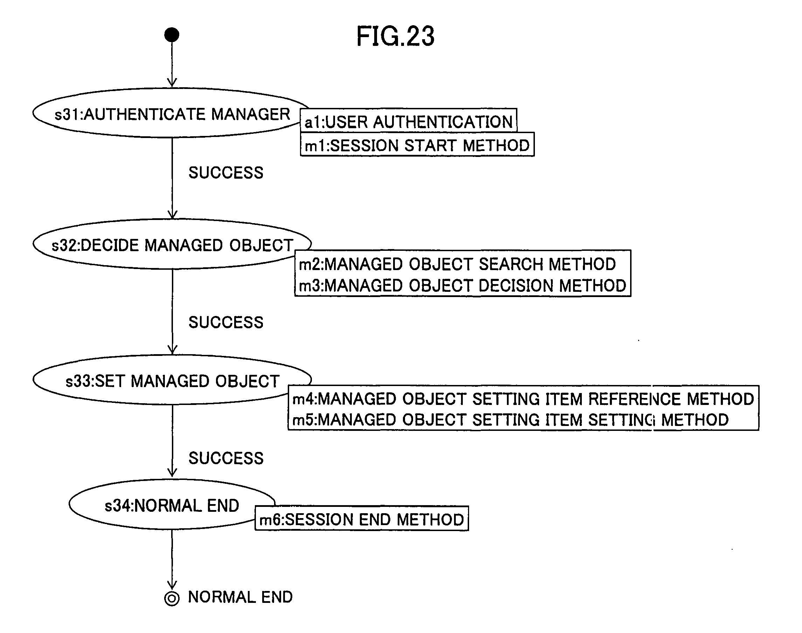

Proceeding to step S22, the editor control part 412 produces a state transition diagram as shown in FIG. 23 from the produced sequence diagram. FIG. 23 is a state transition diagram of an example produced from the sequence diagram. FIG. 23 is an example of the state transition diagram produced from the sequence diagram of FIG. 22.

Step S31 "manager authentication" of FIG. 23 corresponds to messages [1: authenticate] through [3:startSession]. Additionally, step S32 "determination of managed object" of FIG. 23 corresponds to messages "4:searchManagedObject" through "5:determineManagedObject" of FIG. 22. Step S33 "setup for managed object" corresponds to messages "6:getObjectFieldCapability" through "7:setObjectfieldList" of FIG. 22. Step 34 "normal termination" of FIG. 23 corresponds to a message "8:terminateSession" of FIG. 22.

By using the above-mentioned editor function, a user can produce a state transition diagram as shown in FIG. 23 from a sequence diagram as shown in FIG. 22. In step S23, similar to the step S12 of the first embodiment, the data analysis part 413 analyzes the state transition diagram produced in step S22. In step S24, the operation of the Web service client 100 when using the Web service is analyzed in the viewpoint of a state, a method to use, and a state-transition condition. In step S24, the XML generation part 414 creates a scenario based on a result of the analysis of step S23.

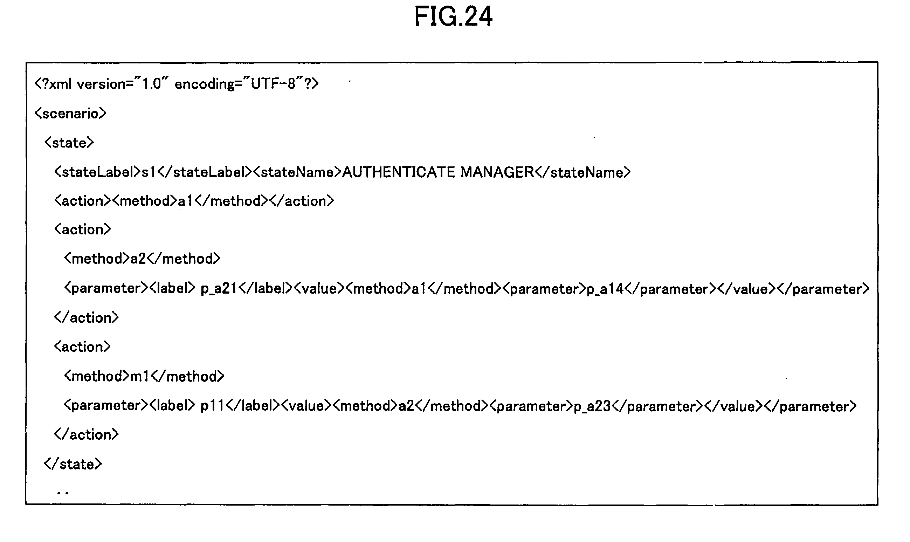

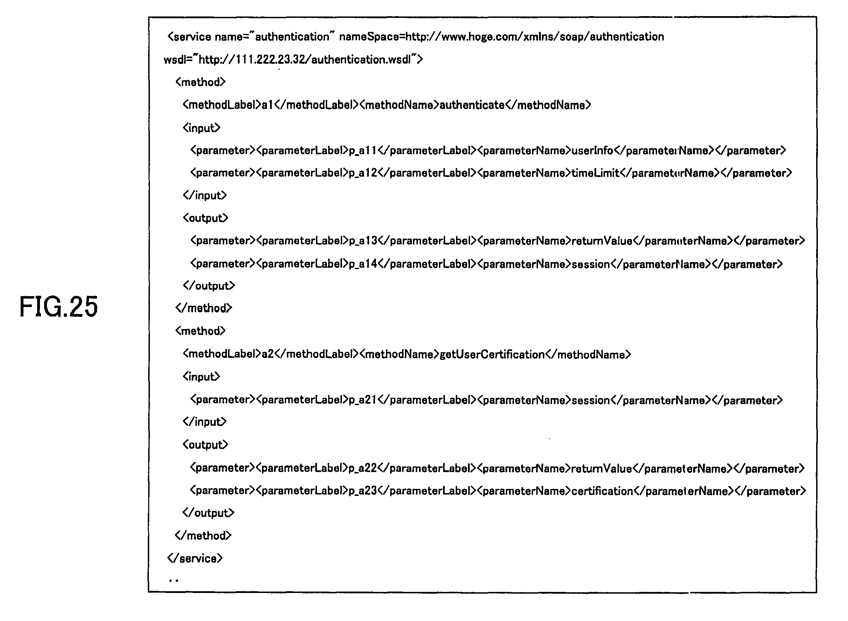

Moreover, FIG. 24 and FIG. 25 are illustrations of parts of an example of the scenario described by XML. It should be noted that the scenario of FIG. 24 and FIG. 25 expresses a part of the scenario produced from the state transition diagram of FIG. 23. The scenario produced from the state transition diagram of FIG. 23 consists of a state definition part, a method definition part and a state transition condition definition part.

It should be noted FIG. 24 expresses the state definition of the scenario. FIG. 25 expresses the method definition part of the scenario. Accordingly, the scenario producing device 400 can produce a state transition diagram as shown in FIG. 23 from the sequence diagram as shown in FIG. 22, and can produce the scenario described by XML such as shown in FIG. 24 and FIG. 25 from the state transition diagram.

In the flowchart of FIG. 20, although an example is shown in which a state transition diagram such as shown in FIG. 23 is produced from a sequence diagram such as shown in FIG. 22 produced by a user so as to produce a scenario described in XML such as shown in FIG. 24 and FIG. 25 from the state transition diagram, a scenario described in XML such as shown in FIG. 24 and FIG. 25 may be produced directly from a sequence diagram produced by a user such as shown in FIG. 22. The sequence diagram of FIG. 22 is to cause a user to define an operation of the Web service client 100 according to action unit of the Web service client 100.

The scenario producing apparatus 400 is capable of directly producing a scenario described in XML such as shown in FIG. 24 and FIG. 25 by using information regarding an operation or action, which is defined by a user, of the Web service client 100, which sends a message to Web service.

### (Third Embodiment)

Although a user is caused to produce a state transition diagram and the scenario is produced from the state transition diagram in the scenario producing device 400 according to the first embodiment, a user can be caused to produce a state transition table and a scenario can also be produce from the state transition table.

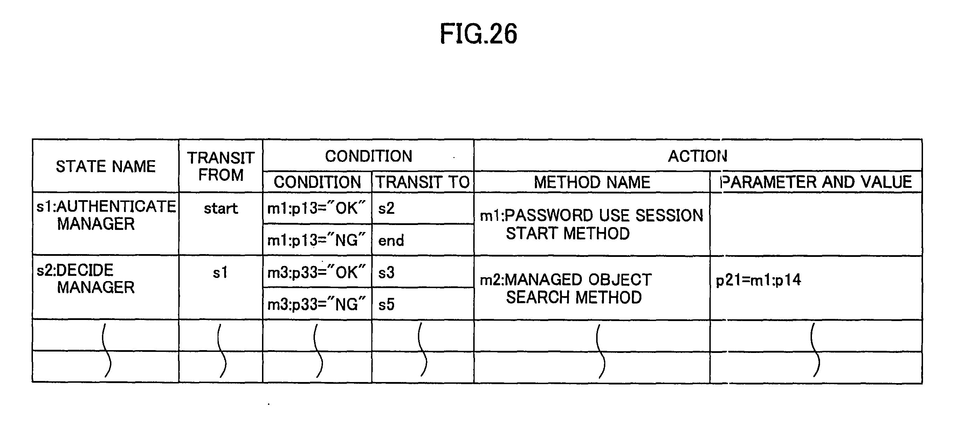

The application 410 of the scenario producing device 400 has the editor function for producing a state transition table. A user produces a state transition table using the editor function of the application 410. By using the editor function, the user can produce the state transition table as shown in FIG. 26.

FIG. 26 shows an example of the state transition table produced by a user. The state transition table of FIG. 26 expresses the state "S1: manager authentication" and "S2: managed object determination" in a state transition diagram of FIG. 13 in a table form. A state transition table is a diagram visually representing the operation of the Web service client 100 when using the Web service.

The state transition diagram as shown in FIG. 23 produced by using the editor function is analyzed by the data analysis part 413 similar to step S12 of the first embodiment. Then, the XML generation part 414 can produce a scenario based on a result of analysis by the data analysis part 413.

### (Use of the Scenario)

The scenario produced in the above-mentioned first through third embodiments is sent from the XML generation part 414 and stored in the storage part 415. Then, the scenario stored in the storage part 415 is registered into the scenario management part 230 of the Web service server 200 through the network I/F 420, the network and the network I/F 210. It should be noted that the scenario stored in the storage part 415 may be registered into the storage part 320 of the service discovery 300 through the network I/F 420, the network and the service management part 310.

Moreover, the scenario producing equipment 400 may be provided with a function to cause a user to edit the scenario stored in the storing part 415. In such as case, a new scenario can be produced by a user editing an existing scenario.

As mentioned above, since the Web service client 100 can acquire and use the scenario, in which operations of the Web service client 100 when using the Web service, is defined from the scenario management part 230 of the Web service server 200 or the storage part 320 of the service discovery 300, the operation when using the service can be easily responded to addition or change in the Web service.

The present invention is not limited to the specifically disclosed embodiments, and variations and modifications may be made without departing from the scope of the present invention.

## Claims

1. An operation definition information producing method for producing operation definition information that defines an operation of a client when using service in a system in which a server providing the service and the client using the service are connected by a network,
**characterized by**:
a defining step of causing a user to define a state of the client when using the service and an operation in the state; and
a producing step of producing the operation definition information that defines the operation of the client when using said service from the state of the client when using the service and the operation in the state that are defined by said user.

2. The operation definition information producing method as claimed in claim 1, wherein said producing step includes:
a step of analyzing an operation of the client when using said service in accordance with the state of the client when using said service and the operation in the state that are defined by said user; and
a step of producing the operation definition information that defines the operation of the client when using said service in accordance with a result of analysis in said analyzing step.

3. The operation definition information producing method as claimed in claim 1 or 2, wherein said defining step causes the user to visually define the state of the client when using said service and the operation in the state.

4. The operation definition information producing method as claimed in claim 3, wherein said defining step causes the user to define the state of the client when using said service and the operation in the state by using a state transit diagram.

5. The operation definition information producing method as claimed in claim 3, wherein said defining step causes the user to define the state of the client when using said service and the operation in the state by using a sequence diagram.

6. The operation definition information producing method as claimed in claim 3, wherein said defining step causes the user to define the state of the client when using said service and the operation in the state by using a table.

7. The operation definition information producing method as claimed in one of claims 1 to 6, wherein said producing step causes the user to edit the operation definition information that has already been produced.

8. The operation definition information producing method as claimed in one of claims 1 to 7, wherein said producing step produces the operation definition information including a state definition part a method definition part and a state transition condition definition part.

9. The operation definition information producing method as claimed in one of claims 1 to 7, wherein said producing step produces the operation definition information of an operation of the client when using said service by a fundamental group, an alternative group and an exceptional group.

10. An operation definition information producing method for producing operation definition information that defines an operation of a client when using service in a system in which a server providing the service and the client using the service are connected by a network, the operation definition information producing method comprising:
a defining step of causing a user to define an action of the client when using the service and an operation in the action; and
a producing step of producing the operation definition information that defines the action of the client when using said service from the action of the client when using the service and the operation in the action that are defined by said user.

11. An operation definition information producing apparatus for producing operation definition information that defines an operation of a client when using service in a system in which a server providing the service and the client using the service are connected by a network,
**characterized by**:
defining means for causing a user to define a state of the client when using said service and an operation in the state; and
producing means for producing the operation definition information that defines the operation of the client when using the service from the state of the client when using the service and the operation in the state that are defined by said user.

12. An operation definition information producing program that causes a computer, which produces operation definition information that defines an operation of a client when using service in a system in which a server providing the service and the client using the service are connected by a network, to function as:
defining means for causing a user to define a state of the client when using said service and an operation in the state; and
producing means for producing the operation definition information that defines the operation of the client when using the service from the state of the client when using the service and the operation in the state that are defined by said user.

13. A computer readable recording medium storing an operation definition information producing program that causes a computer, which produces operation definition information that defines an operation of a client when using service in a system in which a server providing the service and the client using the service are connected by a network, to function as:
defining means for causing a user to define a state of the client when using said service and an operation in the state; and
producing means for producing the operation definition information that defines the operation of the client when using the service from the state of the client when using the service and the operation in the state that are defined by said user.

14. A data structure of operation definition information that defines an operation of a client when using service in a system in which a server providing the service and the client using the service are connected by a network,
**characterized in that**:
the operation of the client when using said service is expressed by a state definition part, a method definition part and a state transition condition definition part.
